# EUROPÄISCHE PATENTANMELDUNG

(11) **EP 1 731 232 A2**
(43) Veröffentlichungstag der Anmeldung: **13.12.2006**
(21) Anmeldenummer: 06010737.2
(22) Anmeldetag: 24.05.2006
(51) Int. Cl.: B08B 9/04, G01M 3/00, F16L 55/36, E03F 7/12

(54) **Rohrinspektionseinheit mit Düse**

(30) Priorität: 10.06.2005 DE 102005026769
(71) Anmelder: IBAK HELMUT HUNGER GmbH & CO. KG, 24148 Kiel (DE)
(72) Erfinder: Stock, Markus, 24116 (DE); Richter, Andreas, 24256 Fargau - Pratjau (DE)
(74) Vertreter: Biehl, Christian

(57) **Zusammenfassung**

Rohrinspektionseinheit, die mit wenigstens einer ein Fluid abgebenden und die Einheit so in einem Rohrsystem vorschiebenden Düsen versehen ist, wobei die Düse zwischen wenigstens einer das Fluid gegen die Vorschubrichtung abgebenden Öffnung und wenigstens einer das Fluid in Vorschubrichtung abgebenden Öffnung schaltbar ist.

## Beschreibung

Die Erfindung betrifft eine Rohrinspektionseinheit mit wenigstens einer ein Fluid abgebenden und die Einheit so in einem Rohrsystem vorschiebenden Düse.

Aus der DE 101 02 056 A1 und der DE 42 29 787 C2 sind Rohrinspektionseinheiten bekannt, die mit einer verstellbaren bzw. schaltbaren Rückstoßdüse versehen sind, die bei Abgeben von unter unter Druck stehendem Wasser die Einheit in dem Rohrsystem vorschiebt.

Regelmäßig ergibt sich aber das Problem, dass die Rohrinspektionseinheit nach erfolgter Arbeit wieder zum Zugang zum Rohrsystem zurückgeholt werden muss, wobei oftmals mehrere Rohrbiegungen überwunden werden müssen. Insbesondere ist nämlich die Reibung der Rohrinspektionseinheit mit Schubelement bei mehrfacher Umlenkung beim Rückholen der Rohrinspektionseinheit größer als beim Einbringen der Rohrinspektionseinheit in das Rohrsystem. Das liegt daran, dass einerseits die Rohrinspektionseinheit der Gefahr in einer Rohrbiegung zu verkanten unterliegt, andererseits der in das Rohrsystem eingeschobene Schlauch dazu neigt, sich an die Kanten der Rohrbiegungen anzulegen und sich im Rohrsystem zu verklemmen.

Da aber ein Nachschieben von der gegenüberliegenden Seite nicht ohne weiteres möglich ist, wäre es wünschenswert, eine Rohrinspektionseinheit zu schaffen, die ― ohne zusätzliche Einrichtungen, die die Abmessungen der Rohrinspektionseinheit vergrößern würden ― ein selbständiges Verfahren in entgegengesetzte Richtungen erlaubt.

Aufgabe der Erfindung ist es deshalb, eine Inspektionseinheit zu schaffen, die mit einfachen Mitteln ein Verfahren der Rohrinspektionseinheit in entgegengesetzte Richtungen ermöglicht.

Die Aufgabe wird gelöst durch eine Rohrinspektionseinheit, mit den Merkmalen des Anspruchs 1. Die Unteransprüche geben vorteilhafte Ausgestaltungen der Erfindung wieder.

Die crfindungsgemäße Rohrinspektionseinheit zeichnet sich also dadurch aus, dass die Düse wenigstens zwei Öffnungen zur Abgabe des Fluids aufweist, die das Fluid jeweils gegen die Vorschubrichtung oder in Vorschubrichtung abgeben, wobei zwischen den Öffnungen geschaltet werden kann. Das bedeutet insbesondere, wenn die Düse nach der Erfindung zur wahlweisen Abgabe des Fluids in im Wesentlichen entgegengesetzte Richtungen eingerichtet ist, dass ein Vorschub in zwei Richtungen erzeugt werden kann, nämlich zum Einfahren der Rohrinspektionseinheit in ein Kanalsystem und zum Rückholen der Rohrinspektionseinheit aus dem Kanalsystem.

Die Düse ist nach der Erfindung derart schaltbar, dass jeweils nur diejenigen Öffnungen das Fluid abgeben, die zur Abgabe des Fluids in derselben Richtung eingerichtet sind. Die Umschaltung zwischen den unterschiedlich ausgerichteten Öffnungen der Düse erfolgt dabei bevorzugt durch Veränderung des Fluiddrucks, wobei die Veränderung des Fluidducks besonders bevorzugt nur kurzzeitig erfolgt. Dieses wird beispielsweise dadurch ermöglicht, dass in der Düse ein Mittel in Form eines federbelasteten Stellglieds vorgesehen ist, das bei Beaufschlagung mit einem höheren Fluiddruck einen Kanal zu den bei niedrigerem Fluiddruck inaktiven Öffnungen freigibt.

Gleichzeitig oder alternativ kann aber auch vorgesehen sein, dass die Düse durch ein elektrisches Signal schaltbar ist. Besonders bevorzugt kann dieses Signal, aufgrund einer kompakten Bauweise und zur einfachen Umsetzung der Erfindung, von einem an der Rohrinspektionsemheit angeordneten Ortungssystem abgegeben sein. Wird das Signal von dem an der Rohrinspektionseinheit angeordneten Ortungssystem abgegeben, ist dieses Signal besonders bevorzugt ein Funksignal.

Ist es dabei ausreichend, dass die Düse nur ein einziges Mal umgeschaltet werden muss, kann die Schalteinrichtung der Düse derart ausgelegt sein, dass die Energie des Funksignats zum Auslösen der Schalteinrichtung der Düse genutzt wird. Ist es jedoch notwendig, mehrfach zwischen den in unterschiedliche Richtungen Fluid abgebenden Düsenöffnungen hin- und herzuschalten, wird die Düse bevorzugt mit Energie aus einem Akkumulator oder einer Batterie gespeist.

Neben der Nutzung des Fluids als vorschuberzeugende Kraft, kann das Fluid selbstverständlich auch zur Reinigung von Rohren verwendet werden.

## Patentansprüche

1. Rohrinspektionseinheit, die mit wenigstens einer ein Fluid abgebenden und die Einheit so in einem Rohrsystem vorschiebenden Düsen versehen ist,
**dadurch gekennzeichnet, dass**
die Düse zwischen wenigstens einer das Fluid gegen die Vorschubrichtung abgebenden Öffnung und wenigstens einer das Fluid in Vorschubrichtung abgebenden Öffnung schaltbar ist.

2. Rohtinspektionseinheit nach einem der vorhergehenden Ansprüche, **dadurch gekennzeichnet, dass** die Düse durch Veränderung des Fluiddrucks schaltbar ist,

3. Rohrinspektionseinheit nach einem der vorhergehenden Ansprüche, **dadurch gekennzeichnet, dass** die Düse durch ein elektrisches Signal schaltbar ist.

4. Rohrinspektionseinheit nach einem der vorhergehenden Ansprüche, **dadurch gekennzeichnet, dass** die Düse durch ein von einem an der Rohrinspektionseinheit angeordneten Ortungssystem abgegebenen Signal schaltbar ist.

5. Rohrinspektionseinheit nach Anspruch 3, **dadurch gekennzeichnet, dass** das Signal ein Funksignal ist.

6. Rohrinspektionseinheit nach einem der Ansprüche 4 oder 5, **dadurch gekennzeichnet, dass** die Schalteinrichtung der Düse mit Energie aus dem Signal des Ortungssystems gespeist ist.

7. Rohrinspektionseinheit nach einem der vorhergehenden Ansprüche, **dadurch gekennzeichnet, dass** die Schalteinrichtung der Düse mit Energie aus einem Akkumulator oder einer Batterie gespeist ist.
